# EUROPÄISCHE PATENTSCHRIFT

(11) **EP 3 731 985 B1**
(45) Veröffentlichungstag und Bekanntmachung des Hinweises auf die Patenterteilung: **29.06.2022**
(21) Anmeldenummer: 19720484.5
(22) Anmeldetag: 17.04.2019
(51) Int. Cl.: B22F 5/04, B22F 7/06, B22F 10/20, B22F 10/36, B22F 10/364, B22F 10/64, C22C 1/04, C22C 32/00

(54) **VERFAHREN ZUR ADDITIVEN HERSTELLUNG EINES BAUTEILS MIT OXIDISCHER DISPERSIONSVERSTÄRKUNG UND ENTSPRECHENDES BAUTEIL**
METHOD FOR ADDITIVE MANUFACTURING A COMPONENT WITH OXIDE DISPERSION STRENGTHENING AND CORRESPONDING COMPONENT
PROCÉDÉ DE FABRICATION ADDITIVE DE PIÈCE AVEC RENFORCEMENT PAR DISPERSION D'OXYDES ET PIÈCE CORRESPONDANTE

(30) Priorität: 09.05.2018 DE 102018207248
(43) Veröffentlichungstag der Anmeldung: 04.11.2020
(73) Patentinhaber: Siemens Energy Global GmbH & Co. KG, 81739 München (DE)
(72) Erfinder: FARAHBOD-STERNAHL, Lena, 30449 Hannover (DE); FELSMANN, Christian, 16341 Panketal (DE); GLASS, Dennis, 10589 Berlin (DE); GRODZKI, Jacek, 14476 Potsdam (DE); HERFURTH, Robert, 16321 Bernau bei Berlin (DE); HOEFENER, Lars, 13156 Berlin (DE); HORNUNG, Bernd, 88499 Riedlingen (DE); RULE, David, 20537 Hamburg (DE); RÜHMER, Tobias Thomas, 01454 Radeberg (DE); THOMAS, Eric, 16515 Oranienburg (DE)
(86) Internationale Anmeldenummer: PCT/EP2019/059881
(87) Internationale Veröffentlichungsnummer: WO 2019/214917

(56) Entgegenhaltungen:
- EP-A1- 2 893 994
- EP-A1- 3 162 473
- EP-A1- 3 222 372
- DE-A1-102007 029 052
- US-A1- 2014 242 400
- US-A1- 2015 275 334
- US-A1- 2017 209 923
- DATABASE COMPENDEX [Online] ENGINEERING INFORMATION, INC., NEW YORK, NY, US; 2017, MIN Z ET AL: "Fabrication and characterization of additive manufactured nickel-based ODS coating layer for high temperature application", XP002791888, Database accession no. E20173704155798 -& MIN ZHENG ET AL: "Fabrication and Characterization of Additive Manufactured Nickel-Based Oxide Dispersion Strengthened Coating Layer for High-Temperature Application", JOURNAL OF ENGINEERING FOR GAS TURBINES AND POWER, Bd. 140, Nr. 6, 1. Juni 2018 (2018-06-01), Seite 62101-1, XP009510979, ASME, NEW YORK, NY, US ISSN: 0742-4795, DOI: 10.1115/1.4038351
- DATABASE COMPENDEX [Online] ENGINEERING INFORMATION, INC., NEW YORK, NY, US; 2017, MIN Z ET AL: "Fabrication and characterization of additive manufactured nickel-based ODS coating layer for high temperature application", Database accession no. E20173704155798 & MIN Z ET AL: "Fabrication and characterization of additive manufactured nickel-based ODS coating layer for high temperature application", PROCEEDINGS OF THE ASME TURBO EXPO - ASME TURBO EXPO 2017: TURBOMACHINERY TECHNICAL CONFERENCE AND EXPOSITION, GT 2017 2017 AMERICAN SOCIETY OF MECHANICAL ENGINEERS (ASME) USA, vol. 6, 2017, DOI: 10.1115/GT2017-63714

## Beschreibung

Die vorliegende Erfindung betrifft ein Verfahren zur additiven Herstellung eines Bauteils mit einem Bereich, welcher eine oxidische Dispersionsverstärkung enthält. Weiterhin wird ein entsprechendes Bauteil.

Das Bauteil ist vorzugsweise für den Einsatz in einer Strömungsmaschine, vorzugsweise im Heißgaspfad einer Gasturbine vorgesehen. Das Bauteil umfasst vorzugsweise als Hauptbestandteil eine nickel- oder kobaltbasierte Superlegierung.

Generative oder additive Herstellungsverfahren umfassen beispielsweise als Pulverbettverfahren das selektive Laserschmelzen (SLM) bzw. Lasersintern (SLS), oder das Elektronenstrahlschmelzen (EBM). Ebenso gehört das Laserauftragschweißen (LMD) zu den additiven Verfahren.

Ein Verfahren zum selektiven Laserschmelzen ist beispielsweise bekannt aus EP 2 601 006 B.

US 2017/209923 A1 bezieht sich auf ein Verfahren zur additiven Herstellung eines Bauteils für den Heißgaspfad einer Gasturbine, bei welchem eine Pulvermischung aus einem Grundwerkstoff und aus einem oxidischen Zusatz zur Herstellung des vollständigen Bauteils verwendet wird.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils auf Basis einer entsprechenden CAD-Datei erfolgen kann.

Weiterhin ist die additive Fertigung besonders vorteilhaft für die Entwicklung oder Herstellung von Prototypen, welche mittels konventioneller subtraktiver oder spanender Verfahren oder Gusstechnologie nicht oder nicht effizient hergestellt werden können.

Neben dem "prototyping" gibt es Bestrebungen, die additive Fertigung weiterhin für die kommerzielle Herstellung von thermisch und/oder mechanisch hochbelasteten Komponenten von Strömungsmaschinen heranzuziehen, beispielsweise Komponenten, welche im Heißgaspfad einer Gasturbine, umfassend Wellenleistungstriebwerke und Strahlturbinen angewendet werden.

Turbinenleit- und Laufschaufeln im Heißgaspfad werden üblicherweise aus hochwarmfesten nickel- oder kobaltbasierten Superlegierungen hergestellt. Bei der Herstellungsroute über generative Fertigungsverfahren, umfassend Laserstrahlschmelzen, Elektronenstrahlschmelzen oder Laserpulverauftragschweißen, gibt es noch eine Vielzahl an Schwierigkeiten, welche die Anwendung dieser Verfahren insbesondere bei rotierenden oder hochbelasteten Schaufeln ausschließen.

Die prozessbedingten raschen Abkühlungraten des involvierten Schweißprozesses führen in der Regel zu einer sehr feinen Kornstruktur, die durch einen niedrigen Widerstand gegen Korngrenzengleiten und damit durch vergleichsweise schlechte Kriecheigenschaften bei höheren Temperaturen charakterisiert sind. Bei niedrigen Temperaturen ist ein feineres Korn bzw. eine Struktur mit einer vergleichsweise kleinen Korngröße zwar hinsichtlich seiner Festigkeit überlegen, jedoch ist eine sehr feine Mikro- oder Kristallstruktur nicht schadenstolerant und führt zu vergleichsweise hohen Rissfortschrittsgeschwindigkeiten.

Beim Einsatz von hochfesten, ausscheidungsgehärteten γ/γ`-Legierungen kommt es nachteilhafterweise zur Bildung von Warm- Heiß- oder Wiederaufschmelzungsrissen. Daher werden Schaufeln für Gasturbinen bisher üblicherweise nicht additiv hergestellt, sondern ausschließlich im Feinguss. Der Feinguss birgt jedoch die Nachteile einer sehr teuren und aufwändigen Bereitstellung der erforderlichen Werkzeuge und führt somit zu langen Durchlaufzeiten und weiteren herstellungsinhärenten Design-Beschränkungen der Schaufeln.

Es ist daher eine Aufgabe der vorliegenden Erfindung, Mittel anzugeben, mit welchen die oben genannten Probleme zumindest teilweise gelöst und insbesondere additive Verfahren für die Herstellung von Heißgasteilen von Turbinen, insbesondere Turbinenschaufeln genutzt werden können. Dabei kann mit Vorteil die Verwendung von großen Anteilen von γ- oder γ`-Phasenausscheidungen, vorzugsweise γ`-Phasenausscheidungen, an hochbelasteten Bereichen der Bauteile mit mangelhafter Schweißbarkeit vermieden, und eine alternative Möglichkeit der strukturellen Verstärkung beziehungsweise Erhöhung der lokalen Festigkeit vorgeschlagen werden.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur additiven Herstellung eines Bauteils, umfassend das Bereitstellen eines pulverförmigen Grundwerkstoffs für das Bauteil. Das Bauteil ist insbesondere ein Bauteil, welches für den Heißgaspfad einer Gasturbine konzipiert wurde, wie einer Turbinenleit- oder Laufschaufel.

Der Grundwerkstoff kann ein erstes Pulver beschreiben.

Das Verfahren umfasst weiterhin das schichtweise Aufbauen des Bauteils auf einer Bauplattform durch Verfestigung einzelner Schichten des Grundwerkstoffs.

In einer Ausgestaltung umfasst der Grundwerkstoff eines der folgenden Materialien: PWA795, Merl72, MAR-509, Stellite-31, Hastelloy X, Haynes 230, Haynes 625, IN939, IN738, IN713, IN792, IN718, Alloy 247, Rene 80 oder andere nickel- oder kobaltbasierte Superlegierungen.

Das erfindungsgemäße Verfahren umfasst weiterhin das Einbringen oder Ausbilden einer oxidischen Dispersionsverstärkung (Oxid-Dispersionsverstärkung) in einen bzw. eines Bereichs des additiv herzustellenden Bauteils mittels eines oxidischen Zusatzes. Der Zusatz besteht vorzugsweise aus, insbesondere mikro- und/oder nanoskaligen Partikeln.

Der Bereich, welcher entsprechend mit einer Dispersionshärtung strukturell verstärkt wird, ist im Betrieb des Bauteils üblicherweise einer hohen thermomechanischen Belastung ausgesetzt. Dies soll bedeuten, dass der Bereich im Betrieb des Bauteils insbesondere einer höheren thermischen und/oder mechanischen Belastung ausgesetzt ist als andere Teile oder Bereiche des Bauteils, welche beispielsweise von dem genannten Bereich beabstandet sind, beispielsweise innenliegende Bereiche der Schaufel.

Unter dem Begriff Dispersionshärtung bzw. -verstärkung ist vorliegend vorzugsweise eine Ausscheidungshärtung mit Teilchen, meistens oxidischen Verbindungen, gemeint, die bis zur Schmelze des Werkstoffs stabil sind. Eine gehärtete Struktur des fertigen Bauteils erfolgt in diesem Sinne dadurch, dass die eingebrachten oxidischen Teilchen oder Zusätze von von äußeren Einflüssen hervorgerufenen, beispielsweise nichtscherbaren, Versetzungen oder Versetzungsbewegungen umgangen werden müssen. Beispielsweise kann eine Dispersionshärtung die möglichen Einsatztemperaturen des Bauteils - im Gegensatz zu einer Standardanwendung - erhöhen, weil sich die Ausscheidungen bei höheren Temperaturen nicht oder weniger stark auflösen als etwa die γ`-Phase. Weiterhin kann eine Dispersionshärtung die Langzeitstabilität des Bauteils verbessern.

Durch das beschriebene Verfahren kann, wie oben angedeutet, eine Härtung der entsprechenden Bauteile vorzugsweise maßgeschneidert an besonders hochbelasteten Bereichen erfolgen. Gleichzeitig kann das Problem der mangelnden Schweißbarkeit von Grundwerkstoffen mit hohem γ- oder γ`-Anteil, vorzugsweise γ`-Anteil, umgangen werden, indem besser schweißbare Grundwerkstoffe (siehe oben) herangezogen werden. Die beschriebene Lösung ist weiterhin wirtschaftlich vorteilhaft, da durch die additiven Verfahrensschritte die Design-Freiheitsgrade dieser Technologie ausgenutzt und die langen Durchlaufzeiten der Gussbauteile umgangen werden können.

In einer Ausgestaltung ist das Bauteil eine Turbinenschaufel, beispielsweise eine Leit- oder Laufschaufel, und der Bereich ein Oberflächenbereich der Turbinenschaufel.

Der Ausdruck "Oberflächenbereich" soll vorliegend bedeuten, dass der entsprechende Bereich vorzugsweise Kontakt mit einer Oberfläche des Bauteils hat, sich dabei aber auch in ein Inneres der Struktur des Bauteils erstrecken kann. Demgemäß wird der Bereich üblicherweise im Einsatz des Bauteils im Heißgaspfad der Gasturbine sowohl mechanisch, als auch thermisch besonders hochbelastet. Der Bereich kann auch einen Spitzen- oder Endbereich des Bauteils bezeichnen.

In einer Ausgestaltung beschreibt oder umfasst der Bereich eine Anströmkante, Profilnase oder Eintrittskante der Turbinenschaufel.

In einer Ausgestaltung beschreibt oder umfasst der Bereich eine Abström- oder Austrittskante der Turbinenschaufel.

In einer Ausgestaltung beschreibt oder umfasst der Bereich einen Spitzenbereich der Turbinenschaufel.

Erfindungsgemäß erfolgt das Einbringen der Verstärkung schichtweise, das heißt, dass das Bauteil zumindest teilweise schichtweise abwechselnd aus dem Grundwerkstoff und einer Mischung aus dem Grundwerkstoff und dem oxidischen Zusatz für die Ausbildung der oxidischen Dispersionsverstärkung aufgebaut wird. Auf diese Weise kann die Verstärkung besonders gut lokal dosiert und/oder maßgeschneidert in den Aufbau des Bauteils eingebracht werden. Gemäß dieser Ausgestaltung kann der Bereich auch ein innenliegender Bereich des Bauteils sein.

In einer Ausgestaltung ist der Bereich ein Oberflächenbereich und ein - von diesem ausgehend - weiter unten oder innen liegender Bereich oder Teilbereich des Bauteils wird zunächst aus dem Grundwerkstoff aufgebaut, wobei der Bereich anschließend aus einer Mischung aus dem Grundwerkstoff und dem oxidischen Zusatz für die Ausbildung der oxidischen Dispersionsverstärkung aufgebaut wird. Gemäß dieser Ausgestaltung kann das Bauteil besonders wirtschaftlich und kostengünstig nur an den thermisch und/oder mechanisch besonders hochbelasteten Stellen, insbesondere an der Bauteiloberfläche, mit der Verstärkung versehen werden.

Der genannte Zusatz kann ein zweites Pulver beschreiben.

In einer Ausgestaltung umfasst das Verfahren das Verhindern einer übermäßigen Agglomeration bzw. von Aufschwimmen des oxidischen Zusatzes während des additiven Aufbaus des Bauteils, d.h. des eigentlichen Schweißprozesses, durch verkürzte Energieeinträge und/oder erhöhte Abkühlungs- oder Verfestigungsraten.

Die Ausdrücke "verkürzte Energieeinträge" und "erhöhte" Abkühlungsraten sollen vorliegend bedeuten, dass die entsprechenden Energieeinträge bzw. Abkühlungsraten im Vergleich zu einem beispielsweise festgelegten, üblichen oder Standardprozess verkürzt oder erhöht sind. Beispielsweise kann ein Energieeintrag durch eine Pulsung des entsprechenden Energiestrahls (Laserstrahls) verringert oder verkürzt werden. Hingegen kann die Abkühlgeschwindigkeit eines Schmelzbades erhöht werden, indem dem Fachmann bekannte Kühlmittel oder -methoden angewendet werden.

In einer Ausgestaltung umfasst das Verfahren das schichtweise Ausbilden einer gerichteten Erstarrung oder (Re)kristallisation entlang einer Längsachse des Bereichs, beispielsweise durch erneutes Umschmelzen einer bereits verfestigten Bauteilschicht und/oder epitaktisches "Aufwachsen" von einer oder mehrerer Folgeschichten und/oder durch eine angepasste thermische Behandlung, Lösungs- oder Rekristallisationsglühen.

Die genannte gerichtete (Re)kristallisation oder gerichtete Erstarrung ist vorzugsweise durch eine gerichtete Korn- oder Kristallstruktur charakterisiert, beispielsweise eine stängelkristalline, kolumnare oder einkristalline Struktur. Durch diese Ausgestaltung kann mit Vorteil ein Elastizitätsmodul entlang der Längsachse des Bauteils bzw. des Bereichs verkleinert und damit eine Wechselfestigkeit des Bauteils und/oder des Bereichs verbessert bzw. eine Ermüdung oder Deformation ("low/high cycle fatigue/thermo-mechanical fatigue") vermieden werden.

Ein weiterer Aspekt der vorliegenden Erfindung betrifft ein Bauteil, welches gemäß dem beschriebenen Verfahren herstellbar oder hergestellt ist. Das Bauteil umfasst weiterhin den oxid-dispersionsverstärkten bzw. oxid-dispersionsgehärteten Bereich und einen weiteren Bereich aus einer, vorzugsweise gut schweißbaren nickel- oder kobaltbasierten, Superlegierung. "Gut" soll in diesem Kontext bedeuten, dass das entsprechende Material wenig anfällig gegenüber Heißrissen oder Warmrissen ist und additiv mit verhältnismäßig hohen Aufbauraten aufgebaut werden kann.

Vorzugsweise betrifft die genannte Legierung das Produkt aus dem additiven Aufbauen, Aufschmelzen, oder Verschweißen des oben genannten Grundwerkstoffs, sodass Schweißbarkeit und/oder Stöchiometrie sich synonym auf dem Grundwerkstoff oder die genannte Superlegierung beziehen können.

In einer Ausgestaltung umfasst das Bauteil entlang einer Längsachse des oxid-dispersionsverstärkten Bereichs eine einkristalline oder gerichtet erstarrte bzw. kolumnare Korn - oder Kristallstruktur mit einem Kornstreckungsverhältnis von mindestens 10 zu 1. Dies ermöglicht mit Vorteil, wie oben beschrieben, das Elastizitätsmodul entlang der Längsachse des Bauteils bzw. des Bereichs zu verkleinern und damit beispielsweise die Wechselfestigkeit des Bauteils in dem Bereich zu verbessern. Vorteile, welche sich demgemäß, auf die gerichtete Erstarrung während des Aufbaus bzw. die gerichtete Rekristallisation nach dem additiven Aufbau beziehen, können ferner die fertig additiv aufgebaute Struktur des Bereichs betreffen, und umgekehrt.

Ein weiterer Aspekt der vorliegenden Offenbarung, welcher nicht von den Ansprüchen gestützt wird, betrifft ein Pulver für die additive Herstellung, insbesondere selektives Laserschmelzen, umfassend den pulverförmigen Grundwerkstoff aus einer nickel- oder kobaltbasierten Superlegierung, und einen oxidischen Zusatz, welcher, vorzugsweise homogen verteilt, in dem Grundwerkstoff vorliegt und geeignet ist, während der additiven Herstellung in dem Bereich des Bauteils eine oxidische Dispersionsverstärkung auszubilden.

Das Pulver kann mittels mechanischen Legierens gemäß dem Stand der Technik hergestellt werden.

In einer Ausgestaltung weist der Zusatz Yttriumoxid, vorzugsweise Y₂O₃, oder Hafniumoxid, vorzugsweise HfO₂, als Nanopartikel in einer Konzentration zwischen 0,5 und 2 Volumenprozenten auf.

In einer Ausgestaltung weist der Zusatz Yttriumoxid, vorzugsweise Y₂O₃, und Hafniumoxid, vorzugsweise HfO₂, als Nanopartikel in einer Konzentration zwischen 0,5 und 2 Volumenprozenten auf.

Der Hafniumoxid-Anteil führt wegen seiner geringen Diffusivität zu einer vorteilhaft geringen Partikel-Agglomerationsrate.

Entsprechendes Yttrium(oxid) ist gegenüber Hafnium(oxid) deutlich kostengünstiger und daher ebenfalls bevorzugt.

In einer Ausgestaltung weist der Zusatz Hafnium (Hf), Tantal (Ta), Zirkonium (Zr), Titan (Ti), und/oder Elemente aus der Gruppe der Lanthanoide als Oxidbildner auf. Diese Elemente können als Oxidbildner bevorzugt sein, da es sich um Mischungen handelt.

In einer Ausgestaltung weist der Zusatz Aluminium (Al), Barium (Ba), Kalium (K), Strontium (Sr) oder Niobium (Nb), und/oder Elemente aus der Gruppe der Lanthanoide als Oxidbildner auf. Diese Elemente können als Oxidbildner ebenfalls, beispielsweise in einer Mischung mit den oben genannten Oxidbildnern, vorgesehen sein.

In einer Ausgestaltung weist der Zusatz bevorzugt spezifische Gehalte an Hafnium, Tantal, Zirkonium und/oder Titan als Oxidbildner auf, um entsprechend den Bindungsenthalpien weniger warmrissfördernde Elemente, z.B. durch Oxidauflösung, in den Grundwerkstoff einzubringen.

Weitere, nicht genannte Elemente als Oxidbildner sind - wegen möglicher Störungen der Stöchiometrie des Pulvers insgesamt - weniger bevorzugt und sollten allenfalls in kleineren Mengen eingesetzt werden.

In einer Ausgestaltung liegt der Zusatz (in dem Pulver) in Mengen vor, die eine Konzentration des Zusatzes zwischen 0,1 und 5 Volumenprozenten in dem Pulver hervorrufen. Diese Angaben können sich vorliegend auf die oxidbildenden Elemente der beschriebenen Ausgestaltungen einzeln oder insgesamt beziehen.

Ein weiterer Aspekt der vorliegenden Offenbarung, welcher nicht von den Ansprüchen gestützt wird, betrifft eine Vorrichtung für die additive Herstellung des Bauteils, vorzugsweise im Pulverbettverfahren, umfassend erste Mittel zum Aufbringen eines ersten pulverförmigen Werkstoffs, insbesondere des Grundwerkstoffs, und zweite Mittel zum Aufbringen eines zweiten, von dem ersten Werkstoff verschiedenen, pulverförmigen Werkstoffs, insbesondere des oxidischen Zusatzes, wobei die Vorrichtung weiterhin ausgebildet ist, ein Vermischen des ersten Werkstoffs und des zweiten Werkstoffs in entsprechenden Vorratsbehältern der Werkstoffe vor dem additiven Aufbau des Bauteils, insbesondere in einem Aufbauvolumen der Vorrichtung, zu verhindern. Das erste Mittel kann einen ersten Vorratsbehälter umfassen. Das zweite Mittel kann einen zweiten Vorratsbehälter umfassen.

Weitere Einzelheiten der Erfindung werden nachfolgend anhand der Figuren beschrieben.
- Figur 1: zeigt ein schematisches Flussdiagramm mit erfindungsgemäßen Verfahrensschritten.
- Figur 2: zeigt eine schematische Schnittansicht einer nicht erfindungsgemäßen Vorrichtung bzw. einer additiven Herstellungsanlage.
- Figur 3: zeigt eine schematische Schnittansicht analog zur Figur 2, wobei ein Bauteil gemäß einer zur Figur 2 alternativen Ausgestaltung additiv aufgebaut wird.
- Figur 4: zeigt eine schematische Seitenansicht einer Turbinenschaufel mit einem im Detail vergrößerten Bereich (rechts).

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

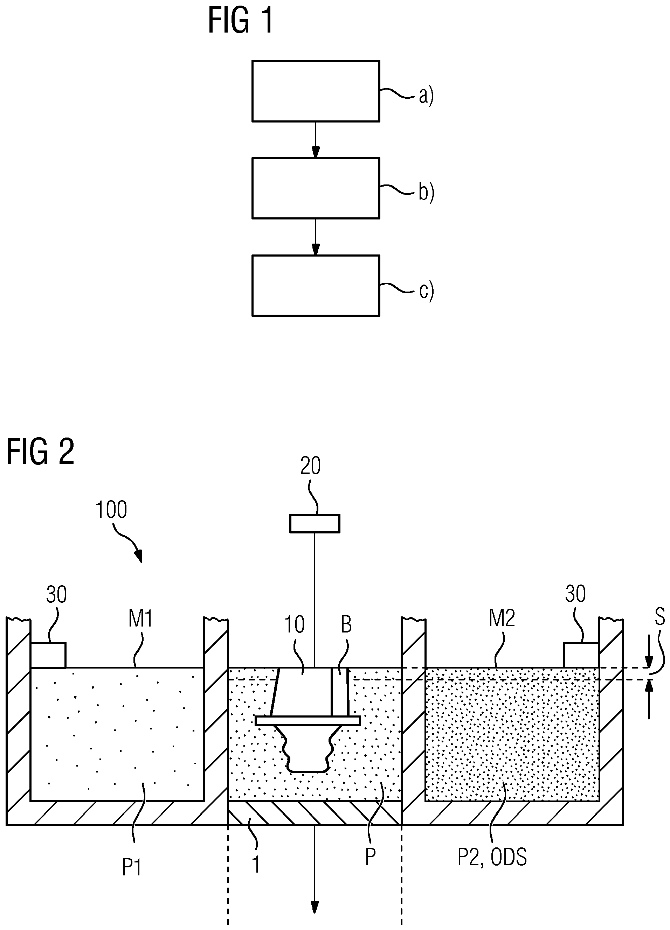

Figur 1 deutet anhand eines schematischen Flussdiagramms erfindungsgemäße Verfahrensschritte an. Das Verfahren ist geeignet zur additiven Herstellung eines Bauteils, insbesondere eines Bauteils, welches im Heißgaspfad einer Gasturbine eingesetzt wird.

Das Verfahren umfasst das Bereitstellen a) eines pulverförmigen Grundwerkstoffs P1 für das Bauteil 10, welches weiterhin nachstehend anhand von Figur 2 beschrieben wird. Das Verfahren umfasst weiterhin das schichtweise Aufbauen b) des Bauteils 10 auf einer Bauplattform 1 durch Verfestigung einzelner Schichten S des Grundwerkstoffs P1. Dieser Verfahrensschritt wird ebenfalls anhand von der Figur 2 (siehe unten) näher beschrieben.

Das Verfahren umfasst weiterhin das Einbringen einer oxidischen Dispersionsverstärkung c) in einen Bereich B des additiv herzustellenden Bauteils 10 mittels eines oxidischen Zusatzes, wobei der Bereich B im Betrieb des Bauteils 10 üblicherweise einer hohen thermomechanischen Belastung ausgesetzt ist, wobei das Einbringen der Verstärkung schichtweise erfolgt, d.h. dass das Bauteil zumindest teilweise schichtweise abwechselnd aus dem Grundwerkstoff und einer Mischung aus dem Grundwerkstoff und dem oxidischen Zusatz (ODS) für die Ausbildung der oxidischen Dispersionsverstärkung aufgebaut wird.

Weiterhin kann das Bauteil 10 eine Lauf- oder Leitschaufel bzw. ein Flügel davon, ein Segment oder Ringsegment, ein Brennerteil oder eine Brennerspitze, eine Zarge, eine Schirmung, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil.

Figur 2 deutet anhand einer schematischen Schnittansicht eine nicht erfindungsgemäße

Vorrichtung 100 zum Herstellen des Bauteils 10 an. Es sind ebenfalls erfindungsgemäße Verfahrensschritte illustriert. Die Vorrichtung 100 umfasst eine Bauplattform 1. Oberhalb der Bauplattform 1 ist in einem (nicht explizit gekennzeichneten) Bauraum, ein Pulverbett angeordnet, in dem das Bauteil 10, insbesondere eine Turbinenschaufel, angeordnet ist und im Wege seiner additiven Herstellung bereits teilweise verfestigt bzw. aufgebaut wurde. Insbesondere ist gezeigt, dass mittels einer Bestrahlungsvorrichtung 20, welche beispielsweise einen Laser- oder Elektronenstrahlquelle umfassen kann, eine Schicht S für ein Schaufelblatt das Bauteil 10 selektiv verfestigt wird. Üblicherweise wird nach erfolgreicher selektive Verfestigung die Bauplattform 1 um ein der Schichtdicke S entsprechendes Maß abgesenkt und eine neue Pulverschicht beispielsweise mittels der eingezeichneten Beschichtungsvorrichtung 30 aufgetragen.

Die Vorrichtung 100 umfasst ein erstes Mittel M1 zum Aufbringen eines ersten pulverförmigen Werkstoffes P1. Mit dem Mittel M1 ist vorzugsweise ein (Vorrats-)Behälter für einen Grundwerkstoff, insbesondere ein erstes Pulver P1 und eine Beschichtungsvorrichtung 30 bezeichnet, mit welcher das Pulver P1 in den Bauraum (schichtweise) befördert werden kann.

Die Vorrichtung umfasst weiterhin ein zweites Mittel M2 zum Aufbringen eines zweiten, von dem ersten Werkstoff verschiedenen, pulverförmigen Werkstoffs P2. Mit dem Mittel M2 ist vorzugsweise ebenfalls ein (Vorrats-)Behälter bezeichnet, in dem ein zweites Pulver P2, insbesondere umfassend oder darstellend einen oxidischen Zusatz zur Ausbildung der oxidischen Dispersionsverstärkung, angeordnet ist, sowie eine entsprechende Beschichtungsvorrichtung 30.

Analog zu dem ersten Mittel M1 kann die Beschichtungsvorrichtung 30 vorzugsweise eine bestimmte Dosis des Pulvers P2 in den Bauraum befördern, sodass beispielsweise eine Mischung aus dem ersten Pulver P1 und dem zweiten Pulver P2 für die additive Herstellung des Bauteils 10 herangezogen werden kann. Die genannte Mischung, enthaltend das erste Pulver P1 und das zweite Pulver P2, ist vorzugsweise ein (Hybrid-) Pulver, welches im Folgenden mit dem Bezugszeichen P gekennzeichnet ist.

Die Vorrichtung 100 ist weiterhin derart ausgebildet, dass ein Vermischen des ersten Werkstoffs P1 und des zweiten Werkstoffs P2 in entsprechenden Vorratsbehältern der der Werkstoffe P1 und P2 vor dem additiven Aufbau des Bauteils 10 und vorzugsweise außerhalb des Bauraums (vgl. mittleren Abschnitt der Figur 1), verhindert wird.

Das erste Pulver P1 stellt vorzugsweise einen Grundwerkstoff oder Hauptbestandteil für das Bauteil 10 dar. Dieser Grundwerkstoff kann insbesondere eines oder mehrere der folgenden Materialien enthalten: PWA795, Merl72, MAR-509, Stellite-31, Hastelloy X, Haynes 230, Haynes 625, IN939, IN738, IN713, IN792, IN718, Alloy 247, Rene 80 oder andere nickel- oder kobaltbasierte Superlegierungen.

Das zweite Pulver P2 umfasst vorzugsweise ebenfalls einen Grundwerkstoff, wie PWA795, Merl72, MAR-509, Stellite-31, Hastelloy X, Haynes 230, Haynes 625, IN939, IN738, IN713, IN792, IN718, Alloy 247 oder Rene 80. Das zweite Pulver P2 umfasst weiterhin einen oxidischen Zusatz (vgl. ODS) und ist geeignet, während der additiven Herstellung des Bauteils 10, in einem Bereich B des Bauteils 10 eine oxidische Dispersionsverstärkung (englisch: ODS für "oxide dispersion-strengthened) auszubilden. Das zweite Pulver P2 kann beispielsweise zwischen 0,5 und 2 Volumenprozenten des Zusatzes ODS enthalten.

Das zweite Pulver P2 bzw. der Zusatz ODS kann Hafnium (Hf), Tantal (Ta), Zirkonium (Zr), Titan (Ti), oder Elemente aus der Gruppe der Lanthanoide als Oxidbildner aufweisen.

In einer Ausgestaltung weist der Zusatz Yttriumoxid, vorzugsweise Y₂O₃, oder Hafniumoxid, vorzugsweise HfO₂, als Nanopartikel in einer Konzentration zwischen 0,5 und 2 Volumenprozenten auf.

In einer weiteren Ausgestaltung weist der Zusatz Yttriumoxid, vorzugsweise Y₂O₃, und Hafniumoxid, vorzugsweise HfO₂, als Nanopartikel in einer Konzentration zwischen 0,5 und 2 Volumenprozenten auf.

In einer weiteren Ausgestaltung weist der Zusatz Aluminium (Al), Barium (Ba), Kalium (K), Strontium (Sr) oder Niobium (Nb), oder Elemente aus der Gruppe der Lanthanoide als Oxidbildner auf.

Anders als in Figur 2 dargestellt, kann der Vorrratsbehälter (rechts), welcher das zweite Pulver P2 vorhält, kleiner dimensioniert sein als derjenige, welcher das erste Pulver P1 vorhält.

Das zweite Pulver P2 bzw. der Zusatz ODS kann in dem entsprechenden Vorratsbehälter weiterhin in einer inerten Matrix oder in einem Träger vorliegen, so dass die erforderliche Konzentration in dem Pulver P leichter eingestellt werden kann.

Das (Hybrid-)Pulver P, enthaltend das oben beschriebene erste Pulver P1 und zweite Pulver P2 ist vorzugsweise für die additive Fertigung, insbesondere selektives Laserschmelzen oder Elektronenstrahlschmelzen vorgesehen und geeignet. Dies kann bedeuten, dass es hinsichtlich seiner Partikelgrößenverteilung und Partikelform, beispielsweise sphärisch, insbesondere für die selektiven Schmelzverfahren geeignet ist.

In einer weiteren Ausgestaltung liegt der Zusatz in dem Pulver in Mengen vor, die eine Konzentration des Zusatzes zwischen 0,1 und 5 Volumenprozenten in dem Pulver hervorrufen.

Weiterhin liegt das zweite Pulver P2 zwar in deutlich geringerer Konzentration im ersten Pulver P1 bzw. Pulver P vor, kann in diesem dennoch vorzugsweise annähernd homogen verteilt sein. Dies kann beispielsweise dadurch ermöglicht werden, dass während des additiven Aufbaus des Bauteils 10, Schichten S von lediglich 20 bis 40 µm Dicke des ersten Pulvers P1 und des zweiten Pulvers P2 für die Verstärkung des Bereichs B alternierend aufgetragen und anschließend bestrahlt und verfestigt werden. Demgemäß kann, wie oben bereits anhand von Figur 2 angedeutet, das Einbringen der Verstärkung schichtweise erfolgen.

Um im Wege des beschriebenen erfindungsgemäßen Verfahrens eine übermäßige Agglomeration bzw. Aufschwimmen des zweiten Pulvers P2 bzw. des oxidischen Zusatzes ODS im ersten Pulver bzw. dem Grundwerkstoff während des additiven Aufbaus des Bauteils 10 zu verhindern, können im Vergleich zu einem Standardverfahren verkürzte Energieeinträge und/oder erhöhte Abkühlungsraten verwendet werden, sodass die Verstärkung möglichst zweckmäßig und homogen eingebracht wird.

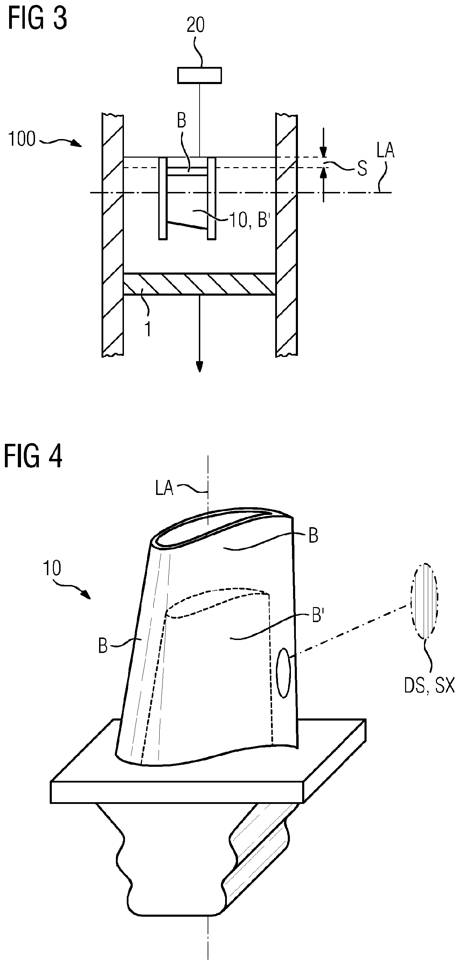

Weiterhin kann im Wege des erfindungsgemäßen Verfahrens eine schichtweise Rekristallisation beispielsweise einer bereits verfestigten/aufgebauten Bauteilschicht S ausgebildet werden (vergleiche Figur 4 weiter unten). Dies wird erfindungsgemäß beispielsweise dadurch ermöglicht, dass entlang einer Längsachse LA (vergleiche Figur 4) des Bereichs B, welche einer Aufbaurichtung (vgl. beispielsweise die vertikale aufsteigende Richtung in Figur 2) entsprechen kann, eine bereits strukturell vorliegende Bauteilschicht durch einen Energiestrahl mit der Bestrahlungsvorrichtung 20 erneut umgeschmolzen wird und/oder beispielsweise mittels Rekristallisationsglühens thermisch behandelt wird. Dieses Verfahren unterscheidet sich, beispielsweise von einer statischen Wärmebehandlung, dadurch, dass eine Wärmequelle gezielt durch das Bauteil oder um das Bauteil herumgeführt wird, sodass sich effektiv eine "heiße Zone" durch das Bauteil bewegt. Durch die beschriebene Rekristallisation kann vorzugsweise ein besonders hohes Kornstreckungsverhältnis in der Kristallstruktur des Bereichs B ausgebildet werden.

Figur 3 zeigt anhand einer schematischen Schnittansicht der Vorrichtung 100 eine alternative Ausgestaltung des beschriebenen Verfahrens. Im Unterschied zur Figur 2, welche eine Vorrichtung 100 mit einer separaten Bevorratung des ersten Pulvers P1 und des zweiten Pulvers P2 zeigt, kann die in Figur 3 gezeigte Vorrichtung eine konventionelle Vorrichtung sein.

Das Bauteil 10 ist vorzugsweise eine Leitschaufel einer Turbine.

Das Bauteil 10 weist vorzugsweise neben dem mit der oxidischen Dispersionsverstärkung ausgestatteten Bereich B einen konventionellen Bereich, auf, in welchen gemäß dem beschriebenen Verfahren keine oxidische Dispersionsverstärkung eingebracht wurde, sondern bei dem es sich um einen konventionellen Bereich handelt, welcher beispielsweise lediglich additiv aus dem Grundwerkstoff (vergleiche erstes Pulver P1) aufgebaut wurde.

Weiterhin im Unterschied zur Figur 2, ist das Bauteil 10, beispielsweise um seine Längsachse LA um 90° gedreht, im Pulverbett angeordnet. Diese Anordnung ermöglicht, das Bauteil 10 bzw. den Bereich zunächst lediglich aus dem Grundwerkstoff (vergleiche erstes Pulver P1) aufzubauen und anschließend erneut in die Vorrichtung 100 einzulegen und diese mit dem zweiten Pulver P2 zu befüllen, um lokalisierte Oberflächenregionen des Bauteils 10 mit der oxidischen Dispersionsverstärkung zu versehen bzw. diese einzubringen. Die genannten Regionen oder Bereiche sind vorzugsweise thermisch und/oder mechanisch besonders hoch belastete Bereiche, welche für den Betrieb des Bauteils strukturell verstärkt werden müssen. Demgemäß kann der Bereich B des Bauteils 10 ein Oberflächenbereich sein, wobei ein Teilbereich B' des Bauteils 10 weiter unten oder innen liegt, und den Bereich B trägt.

Figur 4 zeigt schematisch ein gemäß dem beschriebenen Verfahren herstellbares oder hergestelltes Bauteil 10. Das Bauteil 10 ist - im Gegensatz zu demjenigen aus Figur 3 - eine Laufschaufel einer Turbine. Das Bauteil 10 weist folglich (wie beschrieben) den oxid-dispersionsverstärkten Bereich B, und den weiteren Bereich B', vorzugsweise aus einer (gut) schweißbaren nickel- oder kobaltbasierten Superlegierung auf (siehe oben). Beide Bereiche sind Teil eines Schaufelblatts des Bauteils 10. In bestimmten Situationen kann es jedoch auch vorteilhaft sein beispielsweise einen Schaufelfuß (nicht explizit gekennzeichnet) der gezeigten Turbinenschaufel oder gänzlich andere im Heißgaspfad von Turbinen vorgesehene Bauteile oder andere Maschinen mit der Dispersionsverstärkung zu versehen. Es ist weiterhin in Figur 4 zu erkennen, dass der verstärkte Bereich B an einer Anströmkante (links), an einer Abströmkante (rechts) und an einer Schaufelblattspitze (vgl. oberer Bereich des Bauteils 10 in Figur 4) durch Einbringen der Dispersionsverstärkung vorgesehen wurde.

Weiterhin ist in Figur 4 zu sehen, dass der Bereich B des Bauteils 10 eine einkristalline SX und/oder gerichtet erstarrte DS bzw. stängelkristalline oder kolumnare Korn- oder Kristallstruktur aufweist. Ein entsprechendes Kornstreckungsverhältnis der gerichtet erstarrten Stängel, Körner oder Kristallite beträgt vorzugsweise 10:1 oder mehr, beispielsweise entlang einer Längsachse LA, des oxid-dispersionsverstärkten Bereichs B. Das genannte Kornstreckungsverhältnis wird, wie oben beschrieben, vorzugsweise dadurch ausgebildet, dass schichtweise eine Rekristallisation erfolgt, sodass sich die entsprechenden Stängel oder Körner über eine Mehrzahl von Bauteilschichten erstrecken, beispielsweise über Längen von 100 bis 200 µm oder mehr, wohingegen Kornabmessungen oder Partikelabmessungen einzelner Körner des Grundwerkstoffs wesentlich kleiner sind, beispielsweise zwischen 20 und 40 µm im Durchmesser.

## Patentansprüche

1. Verfahren zur additiven Herstellung eines Bauteils, insbesondere eines Bauteils für den Heißgaspfad einer Gasturbine, (10) umfassend die folgenden Schritte:
- Bereitstellen eines pulverförmigen Grundwerkstoffs (P1) für das Bauteil (10),
- schichtweises Aufbauen des Bauteils (10) auf einer Bauplattform (1) durch Verfestigung einzelner Schichten (S) des Grundwerkstoffs (P1), und
- Einbringen einer oxidischen Dispersionsverstärkung in einen Bereich (B) des additiv herzustellenden Bauteils (10) mittels eines oxidischen Zusatzes, wobei der Bereich (B) im Betrieb des Bauteils (10) üblicherweise einer hohen thermomechanischen Belastung ausgesetzt ist, wobei das Einbringen der Verstärkung schichtweise erfolgt, d.h. dass das Bauteil (10) zumindest teilweise schichtweise abwechselnd aus dem Grundwerkstoff (P1) und einer Mischung aus dem Grundwerkstoff (P1) und dem oxidischen Zusatz (ODS) für die Ausbildung der oxidischen Dispersionsverstärkung aufgebaut wird.

2. Verfahren gemäß Anspruch 1, wobei das Bauteil (10) eine Turbinenschaufel ist und der Bereich (B) einen Oberflächenbereich der Turbinenschaufel, insbesondere eine Abströmkante der Turbinenschaufel, beschreibt.

3. Verfahren gemäß einem der vorhergehenden Ansprüche, wobei der Bereich ein Oberflächenbereich ist und wobei ein unten oder innen liegender Teilbereich (B') des Bauteils (10) zunächst aus dem Grundwerkstoff (P1) aufgebaut wird und der Bereich anschließend aus einer Mischung aus dem Grundwerkstoff (P1) und dem oxidischen Zusatz (ODS) für die Ausbildung der oxidischen Dispersionsverstärkung aufgebaut wird.

4. Verfahren gemäß einem der vorhergehenden Ansprüche, umfassend das Verhindern einer übermäßigen Agglomeration bzw. von Aufschwimmen des oxidischen Zusatzes während des additiven Aufbaus des Bauteils durch verkürzte Energieeinträge und/oder erhöhte Abkühlungsraten.

5. Verfahren gemäß einem der vorhergehenden Ansprüche, umfassend das schichtweise Ausbilden einer gerichteten Rekristallisation (CS, SX) entlang einer Längsachse (LA) des Bereichs (B), beispielsweise durch erneutes Umschmelzen einer bereits verfestigten Bauteilschicht (S) und/oder durch eine thermische Behandlung.

6. Bauteil, welches gemäß dem Verfahren nach einem der vorhergehenden Ansprüche herstellbar oder hergestellt ist, weiterhin umfassend einen oxid-dispersionsverstärkten Bereich (B), und einen weiteren Bereich (B') aus einer schweißbaren nickel- oder kobaltbasierten Superlegierung.

7. Bauteil gemäß Anspruch 6, weiterhin umfassend eine einkristalline oder gerichtet erstarrte bzw. kolumnare Korn- oder Kristallstruktur (DS, SX) mit einem Kornstreckungsverhältnis von mindestens 10 zu 1 entlang einer Längsachse (LA), insbesondere einer Abströmkante, des oxid-dispersionsverstärkten Bereichs (B).

## Claims

1. Process for the additive manufacture of a component, in particular a component for the hot gas path of a gas turbine, (10) comprising the following steps:
- provision of a pulverulent base material (P1) for the component (10),
- layerwise buildup of the component (10) on a building platform (1) by solidification of individual layers (S) of the base material (P1) and
- introduction of oxidic dispersion strengthening into a region (B) of the additively manufactured component (10) by means of an oxidic additive, wherein the region (B) is usually subjected to high thermomechanical stress during operation of the component (10), wherein the introduction of the strengthening is carried out layerwise, i.e. by the component (10) being built up at least partially layerwise alternately from the base material (PI) and a mixture of the base material (PI) and the oxidic additive (ODS) for formation of the oxidic dispersion strengthening.

2. Process according to Claim 1, wherein the component (10) is a turbine blade and the region (B) describes a surface region of the turbine blade, in particular a trailing edge of the turbine blade.

3. Process according to either of the preceding claims, wherein the region is a surface region and wherein a subregion (B') of the component (10) located underneath or in the interior is firstly built up from the base material (PI) and the region is subsequently built up from a mixture of the base material (PI) and the oxidic additive (ODS) for formation of the oxidic dispersion strengthening.

4. Process according to any of the preceding claims, comprising prevention of excessive agglomeration or flotation of the oxidic additive during the additive buildup of the component by means of shortened energy inputs and/or increased cooling rates.

5. Process according to any of the preceding claims, comprising the layerwise formation of oriented recrystallization (CS, SX) along a longitudinal axis (LA) of the region (B), for example by renewed remelting of a previously solidified component layer (S) and/or by means of a thermal treatment.

6. Component which can be produced or has been produced by the process according to any of the preceding claims, further comprising an oxide dispersion strengthened region (B) and a further region (B') composed of a weldable nickel- or cobalt-based superalloy.

7. Component according to Claim 6, further comprising a single-crystal or directionally solidified or columnar grain or crystal structure (DS, SX) having a grain aspect ratio of at least 10:1 along a longitudinal axis (LA), in particular of a trailing edge, of the oxide dispersion strengthened region (B).

## Revendications

1. Procédé de fabrication additif d'une pièce, notamment d'une pièce pour le trajet de gaz chauds d'une turbine (10) à gaz, comprenant les stades suivants :
- on se procure pour la pièce (10) un matériau (P1) de base sous forme de poudre,
- on construit couche par couche la pièce (10) sur une plateforme (1) de construction par consolidation de diverses couches (S) du matériau (P1) de base, et
- on introduit un renforcement oxydé de dispersion dans une partie (B) de la pièce (10) à fabriquer additivement au moyen d'un additif oxydé, dans lequel la partie (B) est, lorsque la pièce (10) est en fonctionnement, soumise à une grande charge thermomécanique, dans lequel l'introduction du renforcement s'effectue couche par couche, c'est-à-dire que l'on construit la pièce (10) au moins en partie couche par couche en alternance en le matériau (P1) de base et en un mélange du matériau (P1) de base et de l'additif (ODS) oxydé pour la constitution du renforcement oxydé de dispersion.

2. Procédé suivant la revendication 1, dans lequel la pièce (10) est une aube de turbine et la région (B) décrit une région superficielle de l'aube de la turbine, notamment un bord de fuite de l'aube de la turbine.

3. Procédé suivant l'une des revendications précédentes, dans lequel la région est une région superficielle et dans lequel on construit une région (B') partielle se trouvant en dessous ou à l'intérieur de la pièce (10), d'abord en le matériau (P1) de base et on construit la région ensuite en un mélange du matériau (P1) de base et de l'additif (ODS) oxydé, pour la constitution du renforcement oxydé de dispersion.

4. Procédé suivant l'une des revendications précédentes, comprenant empêcher une agglomération excessive de l'additif oxydé ou que l'additif oxydé surnage pendant la construction additive de la pièce, en abrégeant l'apport d'énergie et/ou par de plus grandes vitesses de refroidissement.

5. Procédé suivant l'une des revendications précédentes, comprenant la constitution couche par couche d'une recristallisation (CS, SX) dirigée le long d'un axe (LA) longitudinal de la région (B), par exemple par refusion renouvelée d'une couche (S) de la pièce déjà consolidée et/ou par un traitement thermique.

6. Pièce, qui est fabriquée par le procédé suivant l'une des revendications précédentes ou qui peut l'être, comprenant en outre une région (B) renforcée par une dispersion d'oxyde et une autre région (B') en un superalliage soudable à base de nickel ou de cobalt.

7. Pièce suivant la revendication 6, comprenant en outre une structure (DS, SX) cristalline ou en grain, monocristalline ou à solidification dirigée ou en colonne, ayant un rapport d'étendue de grain d'au moins 10 à 1, le long d'un axe (LA) longitudinal, le long d'un bord de fuite, de la région (B) renforcée par dispersion par un oxyde.
